# EUROPÄISCHE PATENTSCHRIFT

(11) **EP 1 577 895 B1**
(45) Veröffentlichungstag und Bekanntmachung des Hinweises auf die Patenterteilung: **20.09.2017**
(21) Anmeldenummer: 05002637.6
(22) Anmeldetag: 09.02.2005
(51) Int. Cl.: G11B 33/04

(54) **Vorrichtung zur Halterung eines Speichermediums**
Device for supporting a storage medium
Dispositif de support d'un appareil d'enregistrement

(30) Priorität: 20.03.2004 DE 102004013876
(43) Veröffentlichungstag der Anmeldung: 21.09.2005
(73) Patentinhaber: Leica Geosystems AG, 9435 Heerbrugg (CH)
(72) Erfinder: Preis, Karl-Heinz, 89522 Heidenheim (DE); Zech, Ulrich, 80805 München (DE); Kolsch, Ingo Dr., 71101 Schönaich (DE)
(74) Vertreter: Lorenz, Werner

(56) Entgegenhaltungen:
- WO-A2-03/019035
- DE-U1- 29 610 411
- US-A- 6 002 588
- US-A1- 2003 218 867
- US-B1- 6 289 678
- US-B1- 6 320 744
- US-B1- 6 560 064
- ANONYMOUS: "Disk File with Reduced or Eliminated Air Effects. February 1981.", IBM TECHNICAL DISCLOSURE BULLETIN, vol. 23, no. 9, 1 February 1981 (1981-02-01), pages 4310-4311, New York, US
- Alain Queau: "LARGE CAPACITY AIRBORNE DATA RECORDERS FOR RECONNAISSANCE APPLICATIONS", Thic Inc., The Premier Advanced Recording Technology Forum, 12 October 1999 (1999-10-12), XP055357915, Virginia Beach, VA, USA Retrieved from the Internet: URL:http://www.thic.org/pdf/Oct99/enertec. aqueau.991012.pdf [retrieved on 2017-03-23]

## Beschreibung

Die Erfindung betrifft einen Flugdatenspeicher zur Aufnahme von Bilddaten in einem Flugzeug mit einer Vorrichtung zur Halterung wenigstens eines Speichermediums.

Aus dem allgemeinen Stand der Technik ist eine Vorrichtung zur Anordnung eines Speichermediums, beispielsweise eines Massenspeichers in Form einer Festplatte, bekannt, bei der das Speichermedium in eine mit einem Gehäuse verbundene Halterung eingebracht wird. Stöße und Schwingungen stören dabei im allgemeinen das Speichermedium nicht, insofern sich der zum Lesen oder Beschreiben des Speichermediums vorgesehene Festplattenkopf in einer Parkposition befindet. Sobald der Festplattenkopf jedoch zum Lesen oder zum Schreiben eingesetzt wird, können Schwingungen bzw. Stöße zu einer Beschädigung bzw. zu einer Zerstörung des Speichermediums führen. Stöße und Schwingungen können verschiedene Ursachen haben und bei den unterschiedlichsten Anwendungen auftreten. Regelmäßig ist dabei mit derartigen Belastungen zu rechnen, wenn das Speichermedium in Land-, Wasser- oder Luftfahrzeugen eingesetzt wird, bei denen während einer Bewegung derselben auf das Speichermedium geschrieben oder Informationen von dem Speichermedium gelesen werden müssen.

Die US 6,320,744 B1 beschreibt ein Array-Modul, das ein Array von elektronischen Einheiten enthält und in einem Installationsrahmen montiert ist. Die elektronischen Einheiten können durch Schienen in einem hermetisch abgedichteten Arraygehäuse montiert werden und Blind-Mate-Steckverbinder können die Geräte an eine hintere Platte anschließen. Blind-Mate-Steckverbinder können auch die hintere Platte mit dem Installationsrahmen für den externen Anschluss verbinden. Eine Vielzahl von elastischen Halterungen sind an dem Einbaurahmen befestigt, um das Rahmen- und Speicher-Array-Modul vor einem externen Schock zu schützen. Ein Thermotransfermechanismus überträgt Wärmeenergie zwischen den elektronischen Einheiten und einem Bereich außerhalb des Installationsrahmens. Die elektronischen Einheiten können in hermetisch abgedichteten Kammern eingeschlossen sein, die seitliche Schienen zur starren Befestigung an der Einheit und einen elastischen Träger aufweisen, der die Seitenschienen mit mindestens einer der Abdeckungen der hermetisch abgedichteten Kammer verbindet. Thermische Schienen können durch eine Vielzahl von elastischen Wärmeleitern entweder an den Seitenschienen oder an einer der Abdeckungen fest montiert werden, und ein Befestigungselement befestigt die thermischen Schienen abnehmbar an einer anderen Seitenschiene oder einer der Abdeckungen, so dass die thermischen Schienen und elastischen Wärmeleiter für die Wärmeleitung zwischen den Seitenschienen und einer der Abdeckungen sorgen.

Die WO 03/019035 A2 beschreibt einen Schwingungsdämpfer zur Dämpfung von Schwingungen mit niedrigen Frequenzen.

Die US 6,002,588 bezieht sich auf den Schutz und das thermische Management von Geräten und insbesondere auf ein Verfahren zur Stoß- und Vibrationsisolation für Komponenten, welche auch eine kontrollierte Temperatur benötigen.

In ANONYMOUS: "Disk File with Reduced or Eliminated Air Effects. February 1981.", IBM TECHNICAL DISCLOSURE BULLETIN, Bd. 23, Nr. 9, 1. Februar 1981 (1981-02-01), Seiten 4310-4311, New York, US, ist eine Festplatte mit reduzierten oder eliminierten Lufteffekten angegeben.

Um auch bei derart rauen Umgebungsbedingungen Daten von dem Speichermedium lesen zu können oder auf dasselbe zu schreiben, sind entsprechend teure Spezialfestplatten bekannt, die zwar derartige Stöße und Schwingungen wenigstens teilweise tolerieren können, aber nur niedrige Datenübertragungsraten zulassen. Von Nachteil dabei ist, dass somit die auf dem Markt als Standardprodukte mit entsprechender Übertragungsrate vorhandenen einfachen und preiswerten Festplatten nicht eingesetzt werden können, wodurch die Kosten um ein Vielfaches höher sind.

Derartige Spezialfestplatten werden insbesondere auch dann eingesetzt, wenn es sich bei dem Speichermedium um einen Flugdatenspeicher handelt, auf den während eines Bildfluges große Datenmengen einer digitalen Kamera abgelegt werden sollen. Bei diesen Daten kann es sich z.B. um Bilddaten, ergänzende Daten zu den Bildern, wie z.B. Missionsdaten, Systeminformationen oder allgemeine Informationen für Post Processing handeln. Das Speichermedium ist hierbei im allgemeinen als Massenspeicher zur "digital mapping camera" ausgelegt.

Im Flugzeug wird jede Speichereinheit mechanisch befestigt und elektrisch mit allen notwendigen Kabeln verbunden. Elektrisch und mechanisch ist jeder Flugdatenspeicher eine eigenständige Einheit, die über einen Bilddatenanschluss mit einer digitalen Kamera verbunden ist. Weiterhin ist ein Kontrolldaten-Eingang, ein Kontrolldaten-Ausgang und ein Versorgungsspannungs-Eingang, ein Versorgungsspannungs-Ausgang sowie ein serieller Anschluss zur Konfiguration vorhanden.

Der Flugdatenspeicher speichert die Bilddaten während des Flugs. Nach der Landung wird der Flugdatenspeicher entnommen und die Bilddaten auf erdgebundene Massenspeicher kopiert. Nach dem Kopiervorgang und einer anschließenden Formatierung ist der Flugdatenspeicher wieder frei für weitere Bildflüge.

Von Nachteil bei einem Einsatz eines Speichermediums als Flugdatenspeicher ist dabei jedoch, dass mit zunehmender Höhe der das Speichermedium umgebende Druck absinkt und sich somit möglicherweise ein Druck einstellt, der unter dem zulässigen Druck liegt, der für ein korrektes Arbeiten des Speichermediums notwendig ist.

Problematisch bei den bisher bekannten Vorrichtungen zur Halterung eines Speichermediums ist außerdem, dass die von der Festplatte ausgehende Wärmeentwicklung nicht zuverlässig abgeführt werden kann.

Die im Bezug auf den Einsatz als Flugdatenspeicher beschriebenen Probleme treten nicht nur in diesem Bereich auf, sondern auch in anderen Bereichen, in denen das Speichermedium in einer rauen Umgebung eingesetzt wird. Hierbei seien z.B. Anwendungen im Militärbereich, im industriellen Umfeld oder bei Feldanwendungen genannt.

Der vorliegenden Erfindung liegt daher die Aufgabe zugrunde, einen Flugdatenspeicher der eingangs erwähnten Art mit einer Vorrichtung zur Halterung mindestens eines Speichermediums zu schaffen, welcher die vorgenannten Nachteile des Standes der Technik löst, bei dem das Speichermedium insbesondere gegen Vibrationen und Stöße sowie Druckschwankungen und eine übermäßige Wärmeentwicklung geschützt ist.

Diese Aufgabe wird erfindungsgemäß durch Anspruch 1 gelöst.

Durch die erfindungsgemäße Anordnung des Speichermediums wird dieses gegen Vibrationen, Schwingungen und Stöße geschützt. Somit kann das Speichermedium als relativ einfache und kostengünstige Standardfestplatte ausgebildet sein. Eine spezielle und somit kostengünstige Spezialanfertigung der Festplatte bzw. des zum Schreiben und/oder Lesen eingesetzten Festplattenkopfes ist somit nicht notwendig. Dadurch, dass das Speichermedium über eine Tragstruktur schwingungsgedämpft ist, kann das Speichermedium in einfacher Weise ausgetauscht werden, ohne dass die gesamte Dämpfungseinrichtung demontiert werden muss. Die Dämpfungseinrichtung und die Tragstruktur können auch beim Wechsel des Speichermediums bzw. bei einem reparaturbedingten oder einem kapazitätsbedingten Austausch unverändert verbleiben. Vorteilhaft ist es dabei, wenn die Dämpfungseinrichtung dynamisch ausgelegt ist.

In numerischen Berechnungen und Versuchen hat sich herausgestellt, dass sich eine Ausgestaltung der Dämpfungseinrichtung mit einer Mehrzahl von Schwingungsisolatoren, die vorzugsweise als am Markt erhältliche Drahtseil-Schwingungsdämpfer ausgebildet sind, in besonderer Weise zur Dämpfung bzw. zur Absorption der auftretenden Stöße und Vibrationen eignet.

Dadurch, dass das Speichermedium erfindungsgemäß druckdicht zu einer Außenatmosphäre abgegrenzt ist, wird verhindert, dass bei jedem Wechsel der Höhe, beispielsweise bei einem Einsatz in einem Flugzeug, der Druck im Bereich des Speichermediums absinkt und sich somit möglicherweise ein Druck einstellt, der ein korrektes Arbeiten des Speichermediums nicht mehr zulässt.

Zudem wird so verhindert, dass sich Feuchtigkeit in der Tragstruktur ansammeln könnte, die bei entsprechend niedrigen Temperaturen zu einer für den Betrieb der Speichermedien unzulässigen Erhöhung der relativen Feuchte führen könnte.

Durch die erfindungsgemäße Lösung wird ebenfalls das bei einem Einsatz eines Speichermediums regelmäßig auftretende Problem der Kühlung bzw. der Abführung der durch den Einsatz des Speichermediums entstehenden Wärme, gelöst. Hierzu wird ein Kühlelement eingesetzt, das das Speichermedium, welches druckdicht zu einer Außenatmosphäre abgegrenzt ist, kühlt. Durch die zur Außenatmosphäre druckdichte Anordnung des Speichermediums ist eine Kühlung desselben besonders wichtig, da ansonsten eine Überhitzung und somit eine Beschädigung des Speichermediums nicht zuverlässig ausgeschlossen werden kann.

Durch die Vorrichtung können auch mehrere Speichermedien aufgenommen werden. Hierzu können beispielsweise mehrere Festplattenlaufwerke mechanisch und elektrisch zu einer leicht wechselbaren Einheit zusammengefasst und in einer Tragstruktur angeordnet werden. Alternativ ist es auch möglich, innerhalb eines Gehäuses mehrere Tragstrukturen anzuordnen.

Von Vorteil ist es, wenn die Tragstruktur ebenfalls zur Aufnahme von elektrischen Systembestandteilen, wie Netzteil, Interfaces, Controller bzw. Raid-Controller usw. verwendet wird. In Versuchen hat sich dabei herausgestellt, dass auch für diese elektronischen Systembestandteile eine vibrations- und stoßgeschützte Anordnung vorteilhaft ist.

Die Vorrichtung eignet sich in besonderer Weise, wenn das Speichermedium als Bestandteil eines Flugdatenspeichers in einem Flugzeug zur Speicherung der Bilddaten bzw. weiterer Daten verwendet wird. Von Vorteil ist es, wenn das Gehäuse innerhalb dessen die Tragstruktur mit dem Speichermedium angeordnet ist, mit Mitteln zur Befestigung an einem mit einem Flugzeug verbundenen Adapter ausgebildet ist.

Eine Ausbildung des Gehäuses zur Befestigung an einem Adapter hat sich als besonders geeignet herausgestellt, um die Vorrichtung in einfacher Weise in verschiedenen Flugzeugtypen einsetzen zu können. Der Adapter kann dabei fest mit dem Flugzeug verbunden werden, sodass die Vorrichtung bzw. das Gehäuse eine entsprechende Führung erhält. Eine stoßsichere bzw. vibrationsgeschützte Anordnung des Gehäuses ist dabei nicht notwendig, da die auftretenden Stöße und Schwingungen durch die Dämpfungseinrichtung zwischen der Tragstruktur und dem Gehäuse absorbiert werden. Von Vorteil ist es dabei, wenn das Gehäuse Kupplungselemente aufweist, die zur Übertragung und/oder zum Empfang von Signalen und/oder einer Versorgungsspannung mit Kupplungselementen des Adapters verbindbar sind.

Somit entsteht eine besonders einfache und vorteilhafte elektrische Kontaktierung des Speichermediums bzw. weiterer innerhalb des Gehäuses befindlicher Systembausteine mit einer Kabelverbindung, die beispielsweise zu einer Digitalkamera oder zum Bordnetz führt. Vorteilhaft ist es dabei, wenn durch die mechanische Fixierung des Gehäuses in dem Adapter gleichzeitig die elektrische Kontaktierung mit den angesprochenen Kabelverbindungen erfolgt. Von Vorteil ist es außerdem, dass durch die Dämpfungseinrichtung auch Stöße kompensiert bzw. absorbiert werden, die aus dem Einbringen des Gehäuses in den Adapter resultieren.

In numerischen Berechnungen und Versuchen hat es sich als besonders geeignet herausgestellt, die Tragstruktur, in der das Speichermedium angeordnet ist, druckdicht auszubilden.

Dies kann beispielsweise dadurch realisiert werden, dass die Tragstruktur als druckfestes bzw. druckdichtes Gehäuse ausgebildet ist. Das Speichermedium wird somit in einfacher Weise druckdicht abgekapselt und ist somit unabhängig gegen Druckschwankungen, die beispielsweise auftreten, wenn ein Flugzeug die Höhe wechselt.

In einer Ausgestaltung der Erfindung kann dabei vorgesehen sein, dass die Tragstruktur Mittel aufweist, die ein definiertes Öffnen desselben ermöglichen, um (wenn die Außenatmosphäre ein höheres Druckniveau aufweist als der Innenraum der Tragstruktur) Luft in die Tragstruktur strömen zu lassen, da prinzipiell trotz einer druckdichten Ausbildung der Tragstruktur ein gewisser Druckverlust zwischen der Tragstruktur und der Außenatmosphäre nicht ausgeschlossen werden kann. Erfahrungsgemäß strömt bei einem Einsatz in großen Höhen mehr Luft pro Zeiteinheit aus der Tragstruktur als in der Phase am Boden zurückströmt, weil die Druckdifferenzen unterschiedlich sind. Einem zu niedrigen Innendruck kann dabei durch ein definiertes Öffnen der Tragstruktur entgegengewirkt werden.

Um zu vermeiden, dass Feuchtigkeit, die beim Gasaustausch von außen nach innen transportiert werden kann, das Speichermedium beeinträchtigt, können aus dem allgemeinen Stand der Technik bekannte Trockenpatronen eingesetzt werden.

In einer druckdichten Ausgestaltung der Tragstruktur kann vorgesehen sein, dass der Controller an der Außenseite der Tragstruktur angeordnet ist.

Prinzipiell können der Controller sowie weitere Systembestandteile auch innerhalb der druckdichten Tragstruktur angeordnet sein. Dies ist jedoch nur für derartige Systembestandteile sinnvoll, die eine Druckstabilität brauchen bzw. für die sich diese in nennenswerter Weise vorteilhaft auswirkt.

Von Vorteil ist es, wenn die Außenseite der Tragstruktur mit Kühlrippen versehen ist.

In Versuchen hat sich herausgestellt, dass sich durch eine Ausgestaltung der Tragstruktur mit Kühlrippen eine besonders vorteilhafte Abführung der Wärme von der Tragstruktur an die Außenatmosphäre ergibt.

Von Vorteil ist es, wenn das Kühlelement derart angeordnet bzw. eingesetzt wird, dass das Kühlelement hauptsächlich zur Kühlung der Außenseite der Tragstruktur und/oder des Controllers bzw. weiterer Systembestandteile dient. Vorgesehen sein kann dabei, dass das Kühlelement als Lüfter ausgebildet ist, der Luft von außerhalb des Gehäuses in das Gehäuse einbringt bzw. ansaugt. Das Gehäuse kann dabei zur Konvektion mit der Außenatmosphäre Luftdurchgangsöffnungen aufweisen. Als vorteilhaft hat sich dabei auch der Einsatz von Luftleitblechen herausgestellt, die die Tragstruktur bzw. den Controller und/oder weitere Systembestandteile umgeben und die den von dem Lüfter erzeugten Luftstrom gezielt an diesen vorbeiströmen lassen.

Zur Steuerung des Luftstromes hat es sich außerdem als vorteilhaft herausgestellt, wenn zwischen dem Lüfter und der Tragstruktur bzw. dem Controller und/oder weiteren Systembestandteilen eine Bespannung vorgesehen ist. Die Bespannung kann dabei beispielsweise als Textilbespannung ausgebildet sein und verhindert, dass der Lüfter den Luftstrom in Bereiche fördert, er nicht wirksam ist. Durch die Bespannung lässt sich der Luftstrom gezielt zu den Bereichen leiten, an denen eine Wärmeabfuhr notwendig ist.

In einer konstruktiven Ausgestaltung der Erfindung kann alternativ zu der druckdichten Ausgestaltung der Tragstruktur auch vorgesehen sein, dass das Gehäuse druckdicht ausgebildet ist. Die Tragstruktur kann dabei derart ausgebildet sein, dass eine Zirkulation des im Gehäuse abgeschlossenen gasförmigen Mediums (z.B. Luft) um das Speichermedium möglich ist. Hierbei handelt es sich um eine Ausführungsform, die für bestimmte Anwendungen vorteilhaft erscheinen mag.

Generell hat sich in Versuchen jedoch herausgestellt, dass sich eine druckdichte Ausbildung der Tragstruktur, die hinsichtlich ihres Innenraums möglichst an das aufzunehmende Speichermedium angepasst ist, besonders eignet. Nachteilhaft bei der druckdichten Ausgestaltung des Gehäuses ist, dass keine kühle Außenluft zur direkten Kühlung der wärmeerzeugenden Elemente herangezogen werden kann. Die Kühlung der in dem druckdichten Gehäuse enthaltene Systembestandteil kann lediglich rein passiv erfolgen, indem diese die Wärme an das druckdichte Gehäuse abgeben und die Wärme von dem druckdichten Gehäuse anschließend an die Außenumgebung abgeleitet wird. Die Kühlung kann dabei verbessert werden, wenn innerhalb des druckdichten Gehäuses ein Kühlelement, beispielsweise ausgebildet als Lüfter, angeordnet ist. Das Kühlelement kann dabei zur Zirkulation des gasförmigen Mediums innerhalb des druckfesten Gehäuses verwendet werden, wodurch die Wärmeableitung in das Gehäuse verbessert wird. Zur Steuerung der Zirkulation des gasförmigen Mediums kann dabei eine Bespannung, vorzugsweise eine textile Bespannung eingesetzt werden, sodass innerhalb des druckdichten Gehäuses im wesentlichen die wärmeerzeugenden Systembestandteile, vorzugsweise das Speichermedium, durch den Lüfter gekühlt werden.

Vorteilhafte Ausgestaltungen und Weiterbildungen der Erfindung ergeben sich aus den weiteren Unteransprüchen.

Nachfolgend sind anhand der Zeichnung Ausführungsbeispiele der Erfindung prinzipmäßig dargestellt.

Es zeigt:
- Fig. 1: eine prinzipmäßige Darstellung einer Vorrichtung mit einem Speicherelement, das innerhalb einer druckdicht ausgebildeten Tragstruktur angeordnet ist;
- Fig. 2: eine perspektivische Darstellung der Tragstruktur mit einem an der Außenseite befestigten Controller, Luftleitbleichen und einer Dämpfungseinrichtung zur Befestigung an einem nicht dargestellten Gehäuse;
- Fig. 3: eine Innenansicht der Tragstruktur mit zwei als Festplatten ausgebildeten Speichermedien;
- Fig. 4: eine perspektivische Darstellung eines Adapters in welchem ein Gehäuse der erfindungsgemäßen Vorrichtung eingesetzt ist, und
- Fig. 5: eine zu Fig. 1 alternative Ausgestaltung, welche nicht Teil der Erfindung ist, wobei das Gehäuse druckdicht ausgebildet ist.

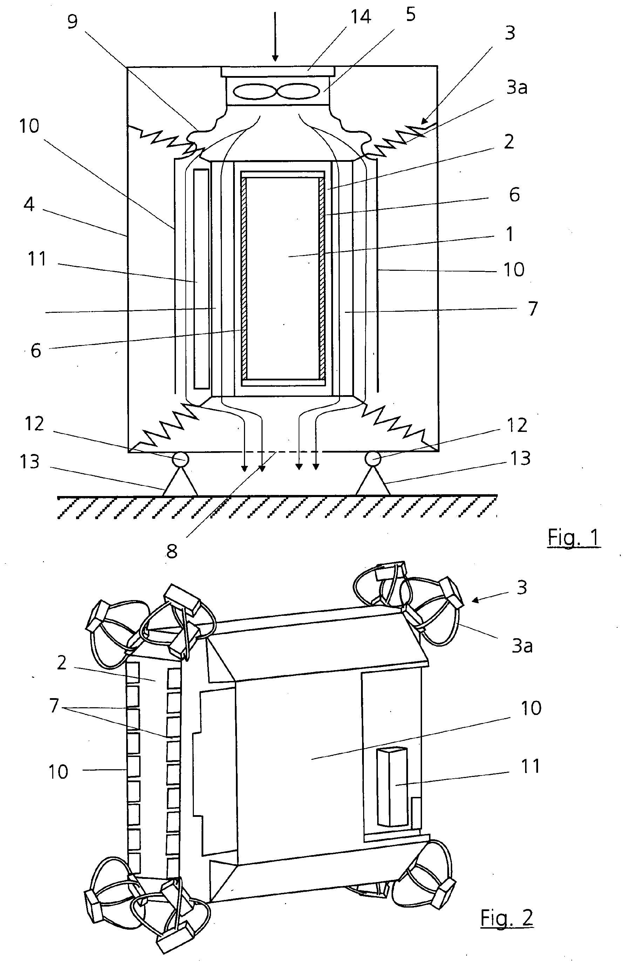

Fig. 1 zeigt die Vorrichtung zur Halterung wenigstens eines Speichermediums 1. Im Ausführungsbeispiel ist dabei vorgesehen, dass das Speichermedium 1 als Festplattenspeicher ausgebildet ist. Der Festplattenspeicher dient dabei dazu, die während des Bildfluges von einer digitalen Kamera erfassten Daten abzulegen. Digitale Kameras zur Aufnahme derartiger Daten sind aus dem allgemeinen Stand der Technik hinlänglich bekannt, weshalb im Ausführungsbeispiel hierauf nicht näher eingegangen wird. Prinzipiell eignet sich die Vorrichtung zum Einsatz in den unterschiedlichsten Gebieten, bei denen ein zuverlässiges Schreiben bzw. Lesen von Daten auf bzw. von einem Speichermedium erforderlich ist. Besonders bevorzugt eignet sich die Vorrichtung dabei in den Bereichen der Technik bei dem das Speichermedium während dem Lesen oder Schreiben Stößen, Vibrationen oder Schwingungen und/oder Druckschwankungen ausgesetzt ist.

Das Ausführungsbeispiel zeigt den Anwendungsfall eines Flugdatenspeichers, der zur Aufnahme von Bilddaten in einem Flugzeug eingesetzt wird.

Da ein Teil der im Ausführungsbeispiel enthaltenen Elemente aus dem allgemeinen Stand der Technik bereits hinlänglich bekannt ist, wird nachfolgend lediglich auf die für die Erfindung wesentlichen Merkmale näher eingegangen.

Im Ausführungsbeispiel ist das Speichermedium als handelsübliche Festplatte 1 ausgebildet.

Wie aus Fig. 1 ersichtlich ist, ist die Festplatte 1 in einer Tragstruktur 2 angeordnet, welche über eine Dämpfungseinrichtung 3 schwingungsgedämpft mit einem die Tragstruktur 2 umgebenden Gehäuse 4 verbunden ist. Die Festplatte 1 ist dabei druckdicht zu einer nicht näher dargestellten Außenatmosphäre abgegrenzt. Zur Kühlung der Festplatte ist ein Kühlelement 5 vorgesehen. Die druckdichte bzw. druckisolierte Anordnung der Festplatte 1 wird gemäß Fig. 1 dadurch realisiert, dass die Tragstruktur 2 druckdicht ausgebildet ist. Die Tragstruktur 2 weist dabei einen Innenraum auf, der im wesentlichen den Abmessungen der Festplatte 1 entspricht. Vorgesehen ist dabei, dass zwischen der Innenseite der Tragstruktur 2 und der Festplatte 1 Wärmeleitelemente 6 angeordnet sind. Gemäß Fig. 1 sind die Wärmeleitelemente dabei als Leitmatten 6 ausgebildet. Die beim Betrieb der Festplatte 1 entstehende Temperatur wird somit über die Leitmatten 6 schnell und zuverlässig abtransportiert und in die Tragstruktur 2 eingeleitet. Von der Tragstruktur 2 strahlt die aufgenommene Wärme nach außen ab. Um einen schnellen Wärmeabtransport von der Oberfläche der Tragstruktur 2 zu unterstützen, weist die Tragstruktur 2 an ihrer Außenseite Kühlrippen 7 auf, die die Oberfläche entsprechend vergrößern.

In Fig. 1 ist das Kühlelement 5 im wesentlichen zur Kühlung der Außenseite der Tragstruktur 2 vorgesehen. Das Kühlelement ist dabei als Lüfter 5 ausgebildet, der an dem Gehäuse 4 befestigt ist. Der Lüfter 5 bezieht seine zur Lüftung notwendige Luft von der Außenatmosphäre außerhalb des Gehäuses 4. Von dem Lüfter 5 wird die angezogene Luft in Richtung auf die Tragstruktur 2 gefördert bzw. ventiliert, sodass die Luft an einer möglichst großen Oberfläche der Tragstruktur 2 vorbeiströmt. Zur Konvektion mit der Außenatmosphäre weist das Gehäuse 4 zusätzlich zu der Ansaugöffnung für den Lüfter 5 Luftdurchgangsöffnungen 8 auf. Zur Steuerung des Luftstromes zwischen dem Lüfter 5 und der Tragstruktur 2 ist eine textile Bespannung 9 vorgesehen. Die textile Bespannung 9 ist dabei derart aufgespannt, dass die Tragstruktur 2 inmitten des von dem Lüfter 5 erzeugten Luftstromes liegt. Ergänzend zu der textilen Bespannung 9 weist das in Fig. 1 dargestellte Ausführungsbeispiel Leitbleche 10 auf, die den vom Lüfter 5 erzeugten Luftstrom 2 ebenfalls entsprechend kanalisiert an der Tragstruktur 2 vorbeiführen sollen. Dabei ist gemäß Fig. 1 vorgesehen, dass die textile Bespannung 9 zwischen dem Lüfter 5 und den Leitblechen 10 aufgespannt ist.

Die Leitbleche 10 können an den Kühlrippen 7 der Tragstruktur 2 anliegen bzw. an diese angrenzen, sodass durch die Leitbleche 10 und die Kühlrippen 7 Kanäle geschaffen werden, durch die die vom Lüfter 5 erzeugte Luft zur Kühlung der Außenseite der Tragstruktur 2 strömen kann.

Wie aus Fig. 1 ersichtlich ist, ist an der Außenseite des Tragstruktur 2 ein Controller 11 angeordnet. Zusätzlich zu dem Controller 11 können in nicht näher dargestellter Weise auch weitere Systembestandteile an der Außenseite der Tragstruktur 2 angeordnet sein. Die Systembestandteile können auch im druckdichten Innenraum der Tragstruktur 2 angeordnet sein, wenn dieses für deren Funktionsfähigkeit als vorteilhaft erscheint.

Wie sich aus Fig. 1 des weiteren ergibt ist der Lüfter 5 derart ausgerichtet, dass zusätzlich zu der Außenseite der Tragstruktur 2 auch der Controller 11 gekühlt wird. Der Controller 11 ist somit innerhalb eines von den Leitblechen 10 begrenzten großen Luftkanales angeordnet. Ein möglicher Weg des Luftstromes ist in Fig. 1 prinzipmäßig dargestellt.

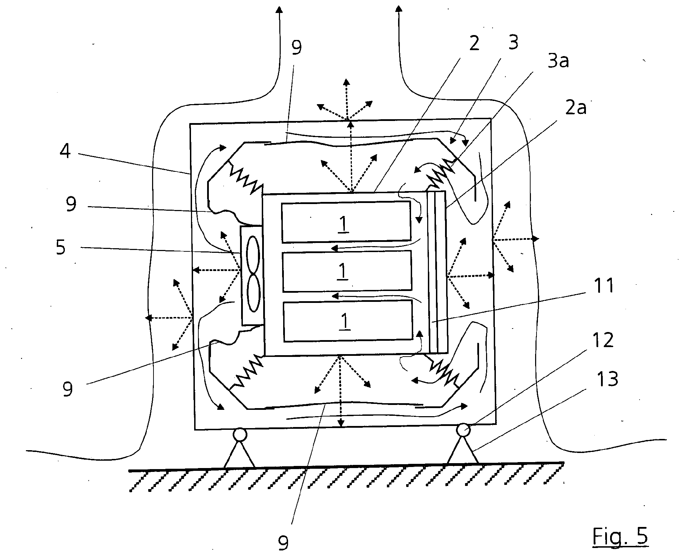

Wie aus Fig. 1 und Fig. 5 ersichtlich ist, weist die Dämpfungseinrichtung 3 eine Mehrzahl an Schwingungsisolatoren 3a auf. In dem dargestellten Ausführungsbeispiel sind die Schwingungsisolatoren dabei als am Markt erhältliche Drahtseil-Schwingungsdämpfer 3a ausgebildet. Diese Drahtseil-Schwingungsdämpfer 3a sind dabei derart angeordnet, dass die Festplatte 1 bzw. die Tragstruktur 2 innerhalb des Gehäuses 4 aufgehängt ist.

Wie aus Fig. 1 des weiteren ersichtlich ist, weist das Gehäuse 4 Mittel 12 zur Befestigung an einem mit einem Flugzeug verbundenen Adapter 13 auf. In nicht näher dargestellter Weise ist dabei auch vorgesehen, dass das Gehäuse 4 Kupplungselemente aufweist, die zur Übertragung/zum Empfang von Signalen und/oder einer Versorgungsspannung mit Kupplungselementen des Adapters 13 verbindbar sind.

Gemäß Fig. 1 ist vorgesehen, dass der Lüfter 5 einen Luftfilter 14 zur Reinigung der angesaugten Luft aufweist.

Fig. 2 zeigt eine Darstellung der Tragstruktur 2 an deren Außenseite acht Drahtseil-Schwingungsdämpfer 3a zur schwingungs- bzw. vibrationsgedämpften Verbindung mit einem in Fig. 2 nicht dargestellten Gehäuse 4 vorgesehen sind. An einer Außenseite der Tragstruktur 2 ist dabei der Controller 11 angeordnet. Wie bereits gemäß Fig. 1 prinzipmäßig dargestellt, weist die Tragstruktur 2 Kühlrippen 7 auf. Die Tragstruktur 2 sowie der Controller 11 werden von zwei Leitblechen 10 umfasst, sodass in Kombination mit den Kühlrippen 7 entsprechende Kühlkanäle geschaffen werden, durch die die von dem Lüfter 5 geförderte Luft (in Fig. 2 nicht dargestellt) strömen kann.

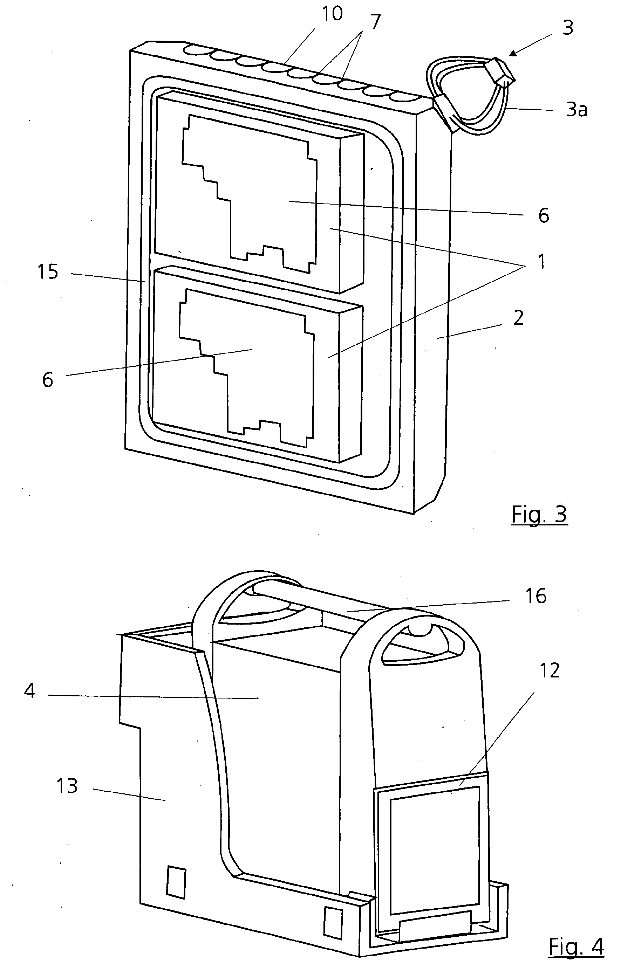

Fig. 3 zeigt eine Ansicht der Tragstruktur 2 gemäß Fig. 2, wobei eine Hälfte der Tragstruktur 2 entfernt wurde, sodass der Innenraum der Tragstruktur 2 prinzipmäßig dargestellt ist. Gemäß dem in Fig. 3 dargestellten Ausführungsbeispiel sind dabei in dem Innenraum des Tragstruktur 2 zwei Festplatten 1 angeordnet. Die Festplatten 1 sind dabei derart angeordnet, dass eine möglichst große Fläche der Festplatten 1 der mit den Kühlrippen 7 versehenen Außenseite der Tragstruktur 2 zugewandt ist. Zwischen den Festplatten 1 und der Innenseite der Tragstruktur 2 sind die bereits erwähnten Wärmeleitelemente 6 in Form von Leitmatten angeordnet.

Die Tragstruktur 2 ist im wesentlichen aus zwei Hälften gebildet, die durch eine Mehrzahl von Schrauben miteinander verbunden werden können. Die beiden Hälften der Tragstruktur 2 sind dabei im wesentlichen als Halbschalen ausgebildet. Zwischen den beiden Halbschalen der Tragstruktur 2 ist die Anordnung einer Dichtung 15 vorzusehen. Somit wird eine ausreichend druckdichte Tragstruktur 2 gebildet, in der die beiden Festplatten 1 angeordnet werden können.

Fig. 4 zeigt eine mögliche Ausgestaltung des Gehäuses 4 und des Adapters 13. Gemäß Fig. 4 sind die Mittel 12 zur Verbindung des Gehäuses 4 mit dem Adapter 13 durch einen Hebel 12 ausgebildet, durch den das Gehäuse 4 in den Adapter 13 eingespannt werden kann. Gegebenenfalls kann der Hebel 12 dabei durch weitere Befestigungselemente bzw. Arretierungsglieder unterstützt werden. Das Gehäuse ist mit einem außenseitig angebrachten Griff 16 versehen, durch den das Gehäuse 4 in einfacher Weise in den Adapter 13 eingesetzt und wieder aus diesem entfernt werden kann. Eine derartige Ausgestaltung eignet sich in besonderer Weise für einen Einsatz der Vorrichtung in einem Flugzeug zur Aufnahme von Bilddaten, da derartige Vorrichtungen häufig entnommen werden müssen, damit die Festplatten 1 ausgelesen werden können.

Fig. 5 zeigt eine zu Fig. 1 alternative Ausgestaltung, welche nicht zur Erfindung gehört. Die in Fig. 5 und Fig. 1 mit gleichen Bezugszeichen bezeichneten Elemente haben dieselbe Funktion und sind mit Ausnahme der nachfolgenden Abweichungen analog bzw. identisch ausgebildet. Im Unterschied zu Fig. 1 ist gemäß Fig. 5 das Gehäuse 4 druckdicht ausgebildet.

Die Tragstruktur 2 weist dabei eine Ausgestaltung auf, die eine Zirkulation des im Gehäuse 4 abgeschlossen gasförmigen Mediums (beispielsweise Luft) um die Festplatte 1 ermöglicht. Dabei ist ebenfalls vorgesehen, dass die weiteren in dem Gehäuse 4 angeordneten Systemelemente, beispielsweise der Controller 11 durch die Zirkulation des im Gehäuse 4 abgeschlossenen gasförmigen Mediums gekühlt werden. In dem Gehäuse 4 ist ein Kühlelement 5 angeordnet, das als Lüfter ausgebildet ist. Innerhalb des Gehäuses 4 ist ebenfalls analog zu Fig. 1 eine textile Bespannung 9 vorgesehen, die die Zirkulation des gasförmigen Mediums derart steuern soll, dass möglichst alle in dem Gehäuse 4 enthaltene Elemente - insbesondere die Festplatte 1 - die zu einer Wärmeentwicklung neigen umströmt bzw. gekühlt werden.

Der Lüfter 5 ist gemäß Fig. 5 an der Außenseite der Tragstruktur 2 derart angeordnet, dass der Lüfter 5 das gasförmige Medium aktiv aus dem Innenraum der Tragstruktur 2, in welchem die Festplatten 1 angeordnet sind, saugt. Durch die textile Bespannung 9 wird das aus dem Innenraum der Tragstruktur 2 gesaugte gasförmige Medium umgeleitet und zu einem dem Lüfter 5 gegenüberliegenden Bereich der Tragstruktur 2 geleitet. Durch entsprechende Öffnungen der Tragstruktur 2 bzw. einem offenen Aufbau desselben kann das gasförmige Medium zur Kühlung der Festplatten 1 wieder in den Innenraum der Tragstruktur 2 einströmen. Ein prinzipiell möglicher und vorteilhafter Strömungsweg ist in Fig. 5 durch die Pfeile dargestellt. Durch die Bespannung 9 und den Lüfter 5 wird eine konstante Strömung des gasförmigen Mediums durch den Innenraum der Tragstruktur 2 und somit entlang der Festplatten 1 realisiert. Der Lüfter 5, die im Innenraum des Gehäuses 4 enthaltenen Systembausteine (Festplatte 1, Controller 11 etc.) sowie der Strömungsweg des gasförmigen Mediums sind derart angeordnet, dass die Wärme möglichst stark in das Gehäuse 4 eingeleitet wird. Von dem Gehäuse 4 wird die Wärme an die Umgebung abgegeben, wodurch eine Kühlung erzielt wird.

Die erfindungsgemäße Lösung eignet sich in besonderer Weise zum druckisolierten und vibrationsgedämpften Befestigen von Speichermedien. In einer Weiterbildung können jedoch auch andere Systemelemente bei denen eine derartige Halterung vorteilhaft ist, anstelle der Speichermedien in die erfindungsgemäße Lösung eingesetzt werden.

## Patentansprüche

1. Flugdatenspeicher zur Aufnahme von Bilddaten in einem Flugzeug mit einer Vorrichtung zur Halterung wenigstens eines Speichermediums (1), wobei das Speichermedium (1) in einer druckdicht ausgebildeten Tragstruktur (2) angeordnet ist, welche in einem die Tragstruktur (2) umgebenden Gehäuse (4) angeordnet ist, wobei ein Kühlelement (5) zur Kühlung des Speichermediums (1) und eines Controllers (11) vorgesehen ist, und wobei der Controller (11) an der Außenseite der Tragstruktur (2) angeordnet ist und die Tragstruktur (2) über Drahtseil-Schwingungsdämpfer (3a) schwingungsgedämpft innerhalb des Gehäuses (4) aufgehängt ist, wobei das Speichermedium (1) aus der Tragstruktur (2) ohne Demontage der aus den Drahtseil-Schwingungsdämpfern (3a) gebildeten Dämpfungseinrichtung (3) entnehmbar ist.

2. Flugdatenspeicher nach Anspruch 1,
**dadurch gekennzeichnet, dass** das Gehäuse (4) mit Mitteln (12) zur Befestigung an einem mit einem Flugzeug verbundenen Adapter (13) ausgebildet ist.

3. Flugdatenspeicher nach Anspruch 2,
**dadurch gekennzeichnet, dass** das Gehäuse (4) Kupplungselemente aufweist, die zur Übertragung/zum Empfang von Signalen und/oder einer Versorgungsspannung mit Kupplungselementen des Adapters (13) verbindbar sind.

4. Flugdatenspeicher nach Anspruch 1, 2 oder 3,
**dadurch gekennzeichnet, dass** zwischen der Innenseite der Tragstruktur (2) und dem Speichermedium (1) Wärmeleitelemente (6) angeordnet sind.

5. Flugdatenspeicher nach Anspruch 4,
**dadurch gekennzeichnet, dass** die Wärmeleitelemente als Leitmatten (6) ausgebildet sind.

6. Flugdatenspeicher nach einem der Ansprüche 1 bis 5,
**dadurch gekennzeichnet, dass** die Außenseite der Tragstruktur (2) mit Kühlrippen (7) versehen ist.

7. Flugdatenspeicher nach einem der Ansprüche 1 bis 6,
**dadurch gekennzeichnet, dass** das Kühlelement (5) zur Kühlung der Außenseite der Tragstruktur (2) und des Controllers bzw. weiterer Systembestandteile dient.

8. Flugdatenspeicher nach einem der Ansprüche 1 bis 7,
**dadurch gekennzeichnet, dass** das Gehäuse (4) zur Konvektion mit der Außenatmosphäre Luftdurchgangsöffnungen (8) aufweist.

9. Flugdatenspeicher nach einem der Ansprüche 1 bis 8,
**dadurch gekennzeichnet, dass** das Kühlelement als Lüfter (5) ausgebildet ist, der Luft von außerhalb des Gehäuses in das Gehäuse (4) einbringt.

10. Flugdatenspeicher nach Anspruch 9,
**dadurch gekennzeichnet, dass** zur Steuerung des Luftstroms zwischen dem Lüfter (5) und der Tragstruktur (2) eine Bespannung (9) vorgesehen ist.

11. Flugdatenspeicher nach einem der Ansprüche 1 bis 10,
**dadurch gekennzeichnet, dass** der von der Tragstruktur (2) ausgebildete Innenraum im Wesentlichen an die Form des Speichermediums (1) angepasst ist.

## Claims

1. A flight data recorder for recording image data, having a holding apparatus for at least one storage medium (1), wherein the storage medium (1) is arranged in a pressure tight supporting structure (2) which is connected to a housing (4), which surrounds the supporting structure (2), wherein a cooling element (5) for cooling the storage medium (1) and a controller (11) is provided, and wherein the controller (11) is arranged on the outside of the supporting structure (2) and the supporting structure (2) is suspended via wire cable vibration dampers (3a) vibrationally dampened within the housing (4) wherein the storage medium (1) can be taken from the supporting structure (2) without removing the damping device (3) formed by the wire cable vibration dampers (3a) with vibration damping via a damping device, with the storage medium being bonded in a pressure tight manner from an external atmosphere, and with a cooling element being provided for cooling the storage medium.

2. The flight data recorder as claimed in claim 1, wherein the housing (4) has means (12) for attachment to an adapter (13) which is connected to an aircraft.

3. The flight data recorder as claimed in claim 2, wherein the housing (4) has coupling elements which can be connected to coupling elements of the adapter (13) in order to transmit/receive signals and/or a supply voltage.

4. The flight data recorder as claimed in any one of claims 1, 2 or 3, wherein thermally conductive elements (6) are arranged between the inside of the supporting structure (2) and the storage medium (1).

5. The flight data recorder as claimed in claim 4, wherein the thermally conductive elements are conductive mats (6).

6. The flight data recorder as claimed in any one of claims 1 to 5, wherein the outside of the supporting structure (2) is provided with cooling ribs (7).

7. The flight data recorder as claimed in any one of claims 1 to 6, wherein the cooling element (5) is used for cooling the outside of the supporting structure (2) and of the controller and/or further system components.

8. The flight data recorder as claimed in any one of claims 1 to 7, wherein the housing (4) has air aperture openings (8) for convection with the external atmosphere.

9. The flight data recorder as claimed in any one of claims 1 to 8, wherein the cooling element is in the form of a fan (5) which introduces air from outside the housing into the housing (4).

10. The flight data recorder as claimed in claim 9 wherein a baffle cloth (9) is provided in order to control the air flow between the fan (5) and the supporting structure (2).

11. The flight data recorder as claimed in any one of claims 1 to 10, wherein the internal area which is formed by the supporting structure (2) is essentially matched with the shape of the storage medium (1).

## Revendications

1. Mémoire de données de vol pour l'enregistrement de données d'images dans un avion, par une installation de maintien d'au moins un support de mémorisation (1), dans lequel le moyen de mémorisation (1) est disposé à l'intérieur d'une structure portante (2) résistant à la pression, la structure portante (2) étant entourée d'un habitacle (4), dans lequel est disposé un élément de réfrigération (5) pour refroidir le support de mémorisation (1), et soumis à un organe de contrôle (11), et dans lequel l'organe de contrôle (11), est monté sur le côté extérieur de la structure portante (2) et la structure portante (2) ayant ses oscillations amorties par des amortisseurs d'oscillations à câbles (3a) suspendus à l'intérieur de l'habitacle (4), dans lequel le support de mémorisation (1), est configuré pour pouvoir être extrait de la structure portante (2) sans démontage de l'installation d'amortissement (3) constituée par les amortisseurs d'oscillations à câbles (3a).

2. Mémoire de données de vol selon la revendication 1,
**caractérisée en ce que** l'habitacle (4) est pourvu de moyens de fixation (12) agencés pour assurer la fixation d'un adaptateur (13) lié à un avion.

3. Mémoire de données de vol selon la revendication 2,
**caractérisée en ce que** l'habitacle (4) est pourvu d'éléments de couplage agencés pour assurer la transmission ou la réception de signaux et/ou d'une tension d'alimentation avec des éléments de couplage de l'adaptateur (13).

4. Mémoire de données de vol selon les revendications 1, 2 ou 3,
**caractérisée en ce que** des éléments conducteurs de chaleur (6) sont disposés entre la face intérieure de la structure portante (2) et le support de mémorisation (1).

5. Mémoire de données de vol selon la revendication 4,
**caractérisée en ce que** les éléments conducteurs de chaleur (6) sont constitués de matelas conducteurs.

6. Mémoire de données de vol selon l'une des revendications 1 à 5,
**caractérisée en ce que** la face extérieure de la structure portante (2) est pourvue de nervures de refroidissement (7).

7. Mémoire de données de vol selon l'une des revendications 1 à 6,
**caractérisée en ce que** l'élément de réfrigération (5) pour refroidir la face extérieure de la structure portante (2) et l'organe de contrôle, est le cas échéant à d'autres organes.

8. Mémoire de données de vol selon l'une des revendications 1 à 7,
**caractérisée en ce que** l'habitacle (4) comprend des évents (8) de passage d'air pour assurer une convexion avec l'atmosphère extérieure.

9. Mémoire de données de vol selon l'une des revendications 1 à 8,
**caractérisée en ce que** l'élément de réfrigération est réalisé comme aérateur (5) qui amène de l'air de l'extérieur dans l'habitacle (4).

10. Mémoire de données de vol selon la revendication 9,
**caractérisée en ce qu'**un recouvrement (9) est prévu entre l'aérateur (5) et la structure portante (2) pour commander le flux d'air.

11. Mémoire de données de vol selon l'une des revendications 1 à 10,
**caractérisée en ce que** l'espace intérieur délimité par la structure portante (2) est essentiellement adapté à la forme de support de mémorisation (1).
